Europäisches Patentamt

European Patent Office

Office européen des brevets

(11) Publication number: **0 480 566 A2**

# EUROPEAN PATENT APPLICATION

(21) Application number: **91307099.1**

(22) Date of filing: **01.08.91**

(51) Int. Cl.5: **H04J 3/07**, H04L 25/49

(30) Priority: **10.10.90 GB 9021997**

(43) Date of publication of application:
**15.04.92 Bulletin 92/16**

(84) Designated Contracting States:
**BE DE FR GB IT**

(71) Applicant: **INTERNATIONAL COMPUTERS LIMITED**
**ICL House**
**Putney, London, SW15 1SW(GB)**

(72) Inventor: **Fox, Trevor Robert**
**24 Kenilworth Road**
**Lowton, Warrington, Cheshire WA3 2AZ(GB)**

(74) Representative: **Guyatt, Derek Charles Patents and Licensing International Computers Limited et al**
**Six Hills House London Road**
**Stevenage, Herts, SG1 1YB(GB)**

(54) **Bit stuffing apparatus.**

(57) A bit stuffing circuit operates on parallel groups of 4-bits. The data is buffered in a 3-bit buffer register, which allows the alignment between the input and output groups to be varied. When a sequence of more than 5 ones is detected in the input data, a zero is inserted after the fifth one, and the number of bits buffered in the register is increased by one, so as to absorb the extra bit. When the buffer becomes full, a "hold" condition is produced, so as to allow the buffer to empty. A corresponding parallel unstuffing circuit is also described.

Fig.1.

## Background to the invention

This invention relates to apparatus for bit stuffing, and is particularly concerned with such apparatus for use in digital data transmission systems. The invention is also concerned with apparatus for performing the inverse operation (unstuffing).

In digital data transmission, it is known to define special control characters consisting of a series of consecutive ones, bounded by zeros. For example, all the control characters may contain more than five consecutive ones. To ensure that these control characters are unique, and cannot occur in the data stream, the data stream is bit stuffed: that is, whenever five consecutive ones occur in the data, a zero is inserted between the fifth one and the next bit. Conversely, at the receiver end, the data is unstuffed, by removing any zeros which follow a group of five ones.

Conventionally, bit stuffing is performed serially by logic which is clocked at the same rate as the serial input data rate. Implementing bit stuffing in this case is relatively straightforward; a counter is used to count the number of consecutive ones, and a zero is inserted when the count reaches the value five.

A problem with this is that, when the data transmission rate is very high, the clock rate of the bit-stuffing logic must also be very high, and hence the logic tends to be expensive.

The object of the present invention is to provide apparatus for reducing the clock rate required for the bit-stuffing logic.

## Summary of the invention

According to one aspect of the invention there is provided a bit stuffing apparatus for receiving a series of input groups of bits and outputting a series of output groups of bits, each input and output group comprising a plurality of bits in parallel, wherein the apparatus includes a buffer memory for buffering a variable number of bits between the input and output groups, means for detecting a sequence of more than a predetermined number of bits of a first predetermined value in said series of input groups, means operative when such a sequence is detected, for inserting an extra bit of a second predetermined value into the input group, and means operative when an extra bit is inserted, for increasing the number of bits buffered in the buffer memory by one so as to absorb the extra bit in the buffer memory and to change the alignment between the input and output groups of bits.

Thus, it can be seen that the invention performs bit-stuffing on parallel groups of bits, rather than serially, with a consequent reduction the clock rate for the bit-stuffing logic.

According to another aspect of the invention there is provided unstuffing apparatus arranged to receive a series of input groups of bits and to output a series of output groups of bits in parallel, wherein the apparatus includes a buffer memory for buffering a variable number of bits between the input and output groups, to permit the alignment between the input and output groups to be varied, and wherein, when a sequence of a predetermined number of bits of a first predetermined value followed by a bit of a second predetermined value is detected, said bit of the second predetermined value is removed and the number of bits buffered in the buffer memory is decreased by one so as to replace the removed bit by one of the bits from the buffer memory.

## Brief description of the drawings

Figure 1 is a block diagram of a digital data transmission system, including bit stuffing and unstuffing circuits.

Figure 2 is a block diagram showing the bit stuffing circuit.

Figures 3, 4 and 5 are schematic diagrams illustrating the operation of the bit-stuffing circuit.

Figures 6, 7 and 8 are logic diagrams showing the bit-stuffing circuit in detail.

Figure 9 is a block diagram showing the unstuffing circuit.

Figures 10 and 11 are schematic diagrams illustrating the operation of the unstuffing circuit.

Figures 12, 13 and 14 are logic diagrams showing the unstuffing circuit in detail.

## Description of an embodiment of the invention

A data transmission system, including bit-stuffing and unstuffing circuits in accordance with the invention, will now be described by way of example with reference to the accompanying drawings.

## Data transmission system

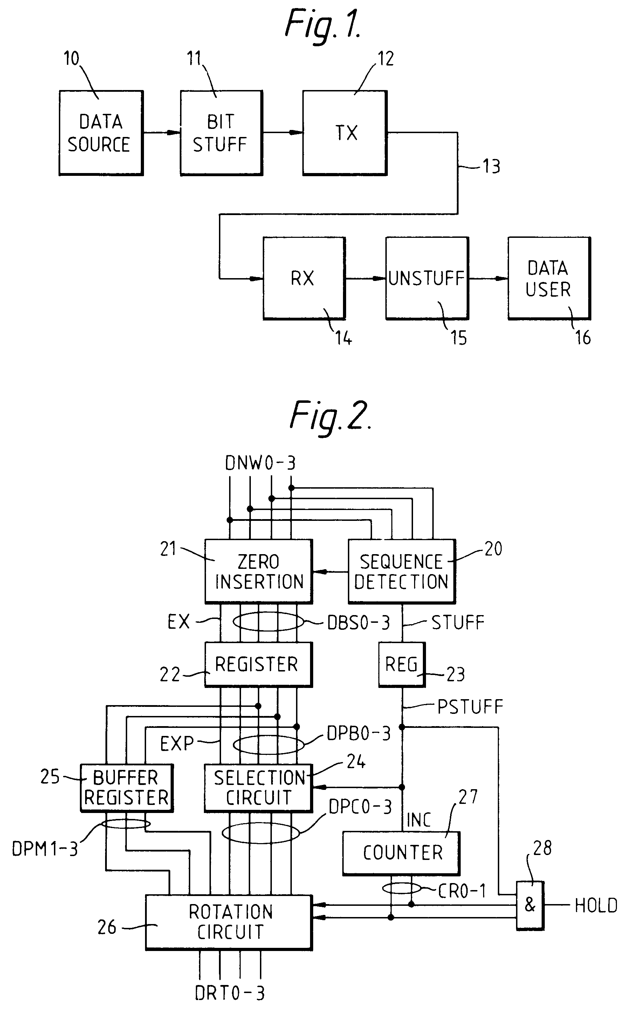

Referring to Figure 1, a data source 10 generates a stream of data in 4-bit parallel form, in synchronism with a data clock signal CL. That is, at each clock beat, four bits are produced by the source 10.

The data is fed to a bit stuffing circuit 11. As will be described later in more detail, the bit stuffing circuit 11 detects sequences of more than five ones in the data, and inserts an extra zero between the fifth one and the next bit.

The bit-stuffed data is passed, still in 4-bit parallel form, to a transmitter 12. This converts the data to serial form, encodes it, adds control characters, and transmits it over a data transmission link 13.

At the other end of the link 13, the serial data is received by a receiver 14. This removes the control characters, decodes the data, and converts it back to 4-bit parallel form to produce a received data signal. The receiver also extracts a clock signal from the data and divides this by four to produce a data clock signal CK to which the received signal is synchronised.

The received data is fed to an unstuffing circuit 15. As will be described later in more detail, this removes the inserted zeros, so as to reconstruct the original data stream. This is then passed, still in 4-bit parallel form, to an end user device 16.

Bit-stuffing circuit

Figure 2 shows a block diagram of the bit-stuffing circuit 11.

The input data group DNW0-3 from the data source 10 is fed to a sequence detection circuit 20, which detects sequences of more than five consecutive ones in the input data, producing signal STUFF to indicate that a zero is to be inserted in the data stream. The input data DNW0-3 is also fed to a zero insertion circuit 21, which produces a five-bit output comprising bits DBS0-3 and an extra bit EX. Normally, in the absence of any detected sequence of more than five ones, the input data DNW0-3 is passed directly to the output DBS0-3. However, when a sequence is detected by the circuit 20, it produces control signals which cause the circuit 21 to insert a zero in the data, to form an extended five-bit group including the extra bit EX.

There are four possible positions in which the zero can be inserted, these being referred to as cases a-d, as follows:

case a     - insert zero after DNW3 (last bit)
case b     - insert zero after DNW2
case c     - insert zero after DNW1
case d     - insert zero after DNW0.

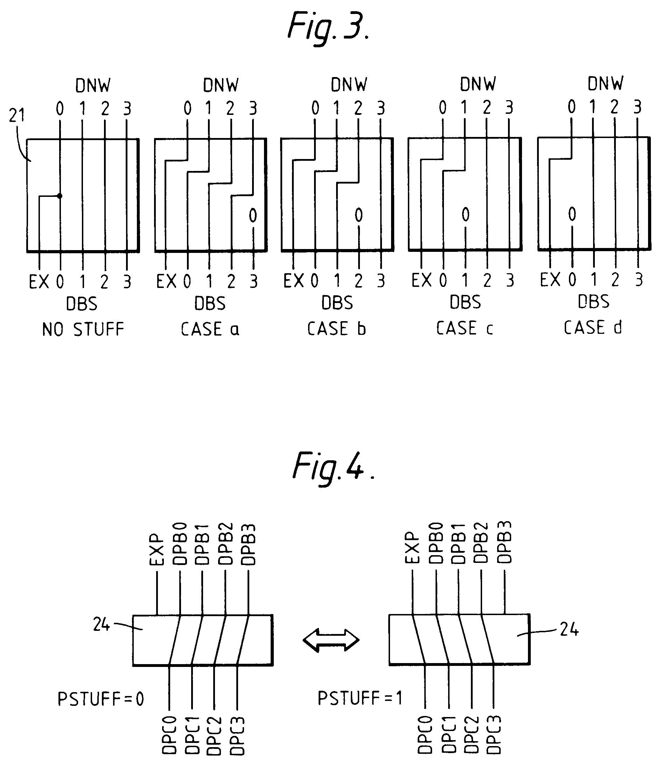

Figure 3 shows schematically the connections produced by the zero insertion circuit 21 for the normal situation (no bit stuff) and for each of these four cases a-d.

The output EX, DBS0-3 from the zero insertion circuit 21 is stored in a 5-bit register 22 at the next beat of clock signal CL, and at the same time the signal STUFF is stored in a single-bit register 23. The outputs of the registers 22, 23 are signals EXP, DPB0-3 and PSTUFF.

The outputs EXP, DPB0-3 from the register 22 are fed to the input of a 2-way selection circuit 24, which is controlled by the signal PSTUFF. The operation of this circuit 24 is shown schematically in Figure 4. When PSTUFF is false, the circuit 24 selects the four bits DPB0-3. When PSTUFF is true, the circuit 24 selects the bits EXP and DPB0-2. The output of the circuit 24 is a 4-bit signal DPC0-3.

The bits DPB 1-3 from the register 22 are also stored in a 3-bit buffer register 25 at the next again clock beat. The output of this register 25 is a 3-bit signal DPM 1-3.

The outputs from the register 25 and the selection circuit 24 are fed to the input of a 4-way rotation circuit 26, having 4 states (states 0-3). The output of the rotation circuit 26 is a 4-bit signal DRT 0-3 which represents the output of the bit-stuffing circuit 11, for feeding to the transmitter 12.

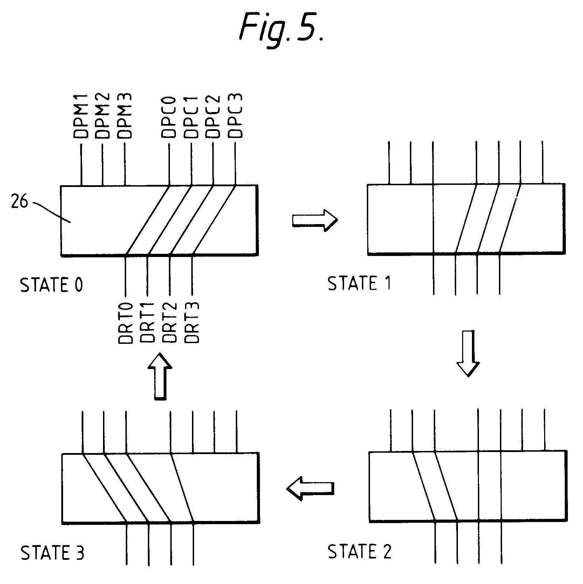

Figure 5 shows schematically the operation of the rotation circuit 26 in each of its four states. It can be seen that, in state 0, the bits DPC 0-3 from the selection circuit 24 are connected to the outputs DRT 0-3. In each of the next three states 1-3, the connections are shifted one place to the left, so as to include one further bit DPM 1-3 from the buffer memory at each shift.

The rotation circuit 26 is controlled by a 2-bit signal CR 0-1 from a 2-stage counter 27. This counter 28 is in turn controlled by the signal PSTUFF, so that it is incremented each time this signal becomes true; i.e. each time a zero is inserted. The counter is cyclic, so that incrementing the counter when it is at count 3 causes the count to be reset to 0.

Thus, it can be seen that the rotation circuit 26 is cycled through the states 0, 1, 2, 3, 0 ... as the counter 27 is incremented through its cycle.

The output CR 0-1 of the counter 27 is fed to an AND gate 28, along with the signal PSTUFF. The output of the AND gate 28 is a signal HOLD, which goes true when the counter is in state 3 (binary 11) and PSTUFF is true. The HOLD signal is fed back to the data source 10, to indicate that the current data input must be held for a further clock beat.

Operation

The operation of the bit-stuffing circuit will now be described. It is assumed initially that the rotation circuit 26 is in state 0, and that no sequence of more than five ones has been detected, so that both STUFF and PSTUFF are false, and the zero insertion circuit 21 is in the "no stuff" state. It can be seen that in this condition, each four-bit input group DNW 0-3 is passed straight through to the output DRT 0-3.

If now a sequence of more that five ones is detected in the input data, the detection circuit 20 produces control signals which cause the circuit 21 to insert a zero at the appropriate position in the input group, so as to form an extended 5-bit group comprising the signals EX, DBS 0-3.

At the next clock beat, the signal PSTUFF goes true, and this switches the selection circuit 24 to the PSTUFF = 1 state, so that it now selects the first four bits (EXP, DPB 0-2) of the extended group. These bits are passed through the rotation circuit 26, and provide the 4-bit output DRT 0-3. The fifth bit DPB 3 cannot be output at this clock beat, and so it is stored temporarily in the buffer register 25.

The counter 27 is then incremented, so as to advance the rotation circuit to state 1. In the absence of a second bit stuff, the selection circuit 24 reverts to its PSTUFF state.

It can be seen that in this condition, the output group DRT 0-3 is now formed by the stored bit DPM 3 (held over from the previous clock beat) and the first three bits DPB 0-2 of the next group. In other words, the alignment between the input and output groups has been changed, so as to absorb the extra bit into the buffer register 25.

Similarly, when a second and third bit stuffs occur, the counter 27 is incremented, and the rotation circuit is advanced to states 2 and 3, so as to absorb the extra bits into the register 25.

When a fourth bit stuff occurs, the three bits DPM 1-3 in the buffer register 25 are output along with bit DPB 0 of the next group, to form the output DRT 0-3. In this case, however, since the counter output is now equal to 3, the AND gate 28 is enabled, producing the signal HOLD. Thus, no new data is loaded into the buffer register 25 at the next clock beat.

Operation then continues as previously described, starting from state 0.

In summary, there is a cycle of four bit stuffs. For the first three of these, the extra bit is absorbed in the buffer register 25. On the fourth bit stuff, the three previously absorbed bits are emptied out of the buffer register, along with the extra bit of the next group. A "hold" condition is produced in the input for one beat, allowing time for the buffer register to be emptied before the cycle starts again.

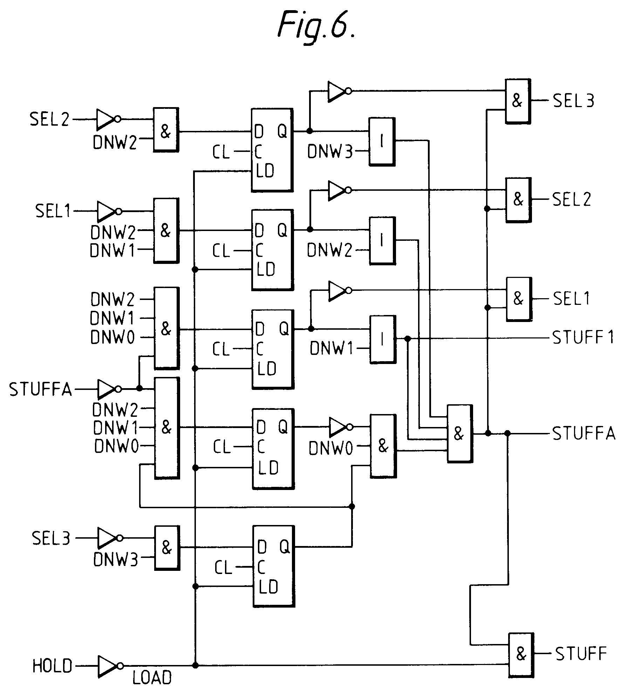

Referring now to Figure 6, this shows the sequence detection circuit 20 in detail.

The circuit comprises D-type flip flops, AND gates, OR gates, and inverter gates connected as shown. The flip-flops are all clocked by the clock signal CL so that data is loaded into them at each clock beat.

With this circuit arrangement, the signal STUFF is produced whenever a sequence of five or more consecutive ones occurs in the input data stream, starting either from a zero in the data stream or from a zero which has been inserted by a previous bit-stuff. The logic operates correctly for strings of ones of any length, including the case where bit stuffs occur in two successive groups.

It should be noted that STUFF is inhibited when the signal HOLD is true. This prevents a second, spurious, bit stuff from being initiated when the data input is in the "hold' condition.

The logic also produces control signals SEL 1-3 and STUFF 1 for controlling the zero insertion circuit 21. As mentioned above, there are five cases, according to the position at which the zero (if any) is to be inserted. These five cases are indicated by the control signals as follows:-

| | STUFF 1 | SEL 1 | SEL 2 | SEL 3 |
|---|---|---|---|---|
| case a | 1 | 1 | 1 | 1 |
| case b | 1 | 1 | 1 | 0 |
| case c | 1 | 1 | 0 | 0 |
| case d | 1 | 0 | 0 | 0 |
| No stuff | 0 | 0 | 0 | 0 |

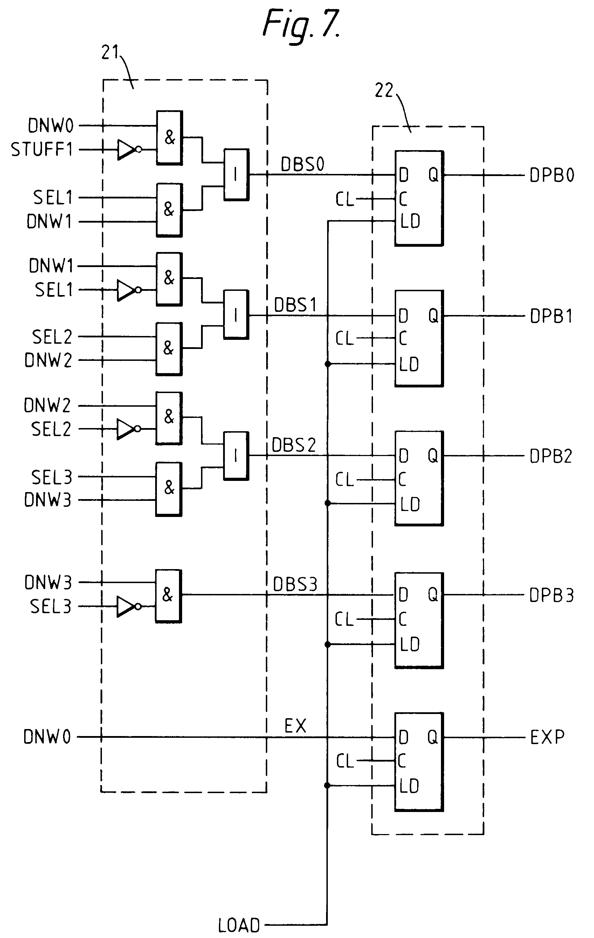

Referring to Figure 7, this shows the zero insertion circuit 21 and the register 22 in detail.

The circuit 21 consists of AND gates, OR gates, and inverter gates connected as shown. It can be seen that control signals STUFF 1 and SEL 1-3 cause the circuit to operate in the five cases as indicated schematically in Figure 3.

The register 22 comprises five D-type flip-flops, each of which is clocked by the clock signal CL, and each of which receives a load enable signal LOAD the inverse of the HOLD signal.

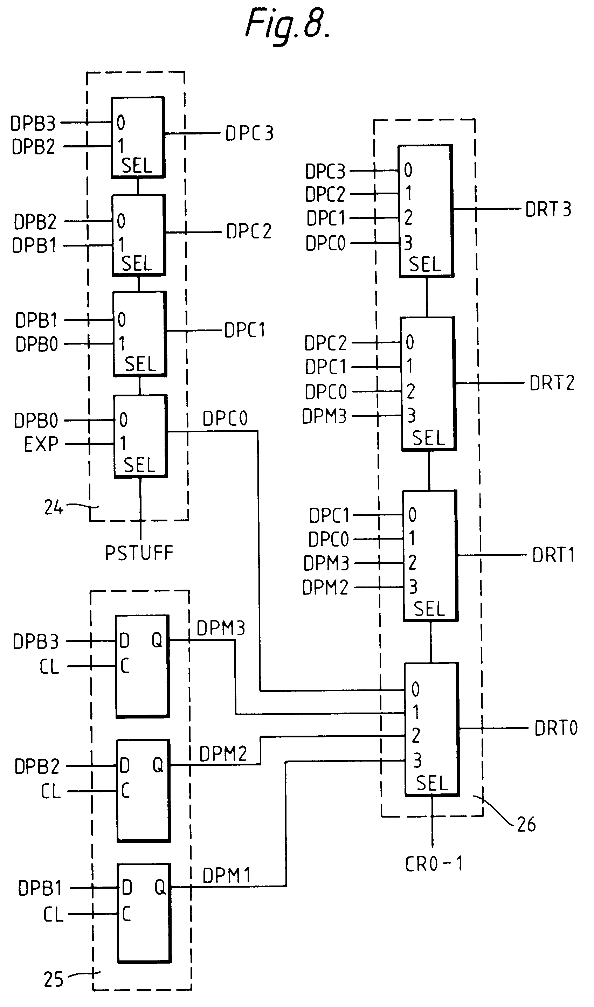

Figure 8 shows the two-way selection circuit 24 buffer register 25, and 4-way rotation circuit 26 in detail.

As shown, the selection circuit 24 comprises four 2:1 multiplexer circuits each having a selection input SEL which is controlled by the signal PSTUFF from the register 23. The register 25 comprises three D-type flip-flops each of which is clocked by CL. The rotation circuit 26 comprises four 4:1 multiplexers, each having a selection input SEL which is controlled by the 2-bit output signal CR 0-1 from the counter 27.

Unstuffing circuit

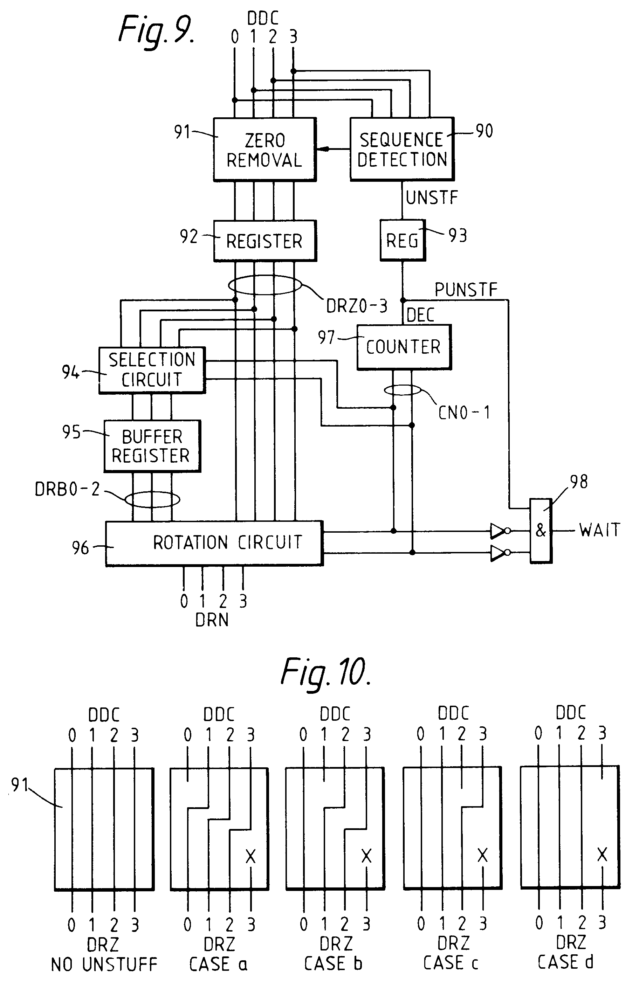

Figure 9 is a block diagram of the unstuffing circuit 15.

The data signal DDC 0-3 from the receiver 14 is fed to a sequence detection circuit 90 which detects sequences of five ones followed by a zero. When such a sequence is detected, the circuit 90 produces a signal UNSTF, indicating that an "unstuff" is to be performed, i.e. that the zero is to be removed. The circuit 90 also produces control signals which indicate the position within the current four-bit group of the zero to be removed (if any).

There are five possible cases:

case a — remove zero from bit DDC3 (last bit)
case b — remove zero from bit DDC2
case c — remove zero from bit DDC1
case d — remove zero from bit DDC0
No unstuff — no zero to be removed.

The control signals from the circuit 90 control a zero removal circuit 91. The operation of this is shown schematically in Figure 10. It can be seen that, in the "no unstuff" case, the input DDC 0-3 is connected directly to the output of the circuit 91. In the other cases, the zero to be removed is ignored, and the remaining three input bits are fed to the first three bits of the output.

The output of the zero removal circuit 91 is stored in a register 92 at the next clock beat CK. At the same time, the signal UNSTF is stored in a single-bit register 93. The outputs of the registers 92, 93 are signals DRZ 0-3 and PUNSTF.

The output of the register 92 is fed to the input of a 4-way selection circuit 94, which produces a 3-bit output. This output is loaded into a 3-bit buffer register 95 at the next again clock beat. The output of this buffer register is a signal DRB 0-2.

The signals DRB 0-2 and DRZ 0-3 are fed to the input of a 4-way rotation circuit 96, to produce the 4-bit output signal DRN 0-3 which forms the output of the unstuffing circuit, for feeding to the data user 16.

The selection circuit 94 and the rotation circuit 96 are both controlled by a 2-bit signal CN 0-1 from a 2-stage counter 97. The counter 97 is decremented by the signal PUNSTF whenever this signal goes true. The counter is cyclic, so that decrementing the counter when it is at count 0 causes the count to be reset to 3. Thus, the counter cycles through the sequence 3, 2, 1, 0, 3 ...

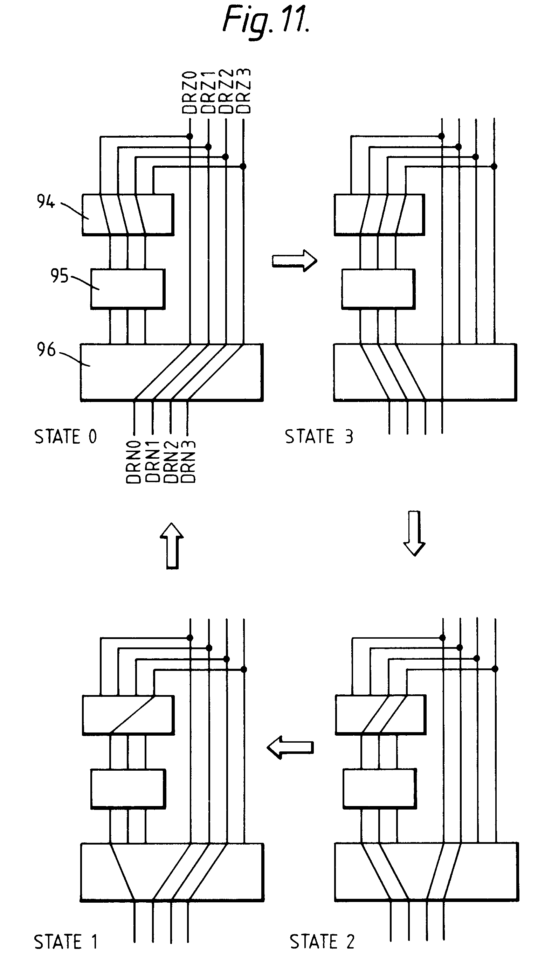

Thus, the selection circuit 94 and the rotation circuit 96 are both stepped through a cycle of four states (state 3, state 2, state 1, state 0, state 3 ..) as the counter is decremented. Figure 11 shows schematically the operation of the selection circuit 94 and rotation circuit 96 in each of these four states.

The output CN 0-1 from the counter 97 is also inverted and fed to an AND gate 98, along with the signal PUNSTF. The output of this AND gate is a WAIT signal, which is true when PUNSTF occurs while the count is at zero. The WAIT signal is fed to the user device 16, to indicate that no new data is available at the output of the unstuffing circuit during the current clock beat.

Operation

The operation of the unstuffing circuit will now be described. It is assumed that initially the counter 97 is at count 0, so that the selection circuit 94 and the rotation circuit 96 are in state 0.

In this case, while no sequence of 5 ones is detected, the input data DDC 0-3 passes straight through the unstuff multiplexer 91 and the rotation circuit 96 to the data output DRN 0-3.

If now a sequence of 5 ones followed by a zero is detected, the zero removal circuit 91 is switched to one of the states for case a - d as appropriate, as shown in Figure 10, so that the zero is ignored, and the remaining three bits are compressed on to the first three outputs.

At the next clock beat, these three bits are loaded into the buffer register 95 by way of the selection circuit 94. At the same time, the signal PUNSTF, in combination with the "0" count of the counter 97, causes the WAIT signal to become true. This indicates to the end user that no new output data group is available in this clock beat, since only 3 bits have been received.

5

At the next clock beat, the counter 97 is decremented, which in this case means it is reset to count 3, so that the circuits 94 and 96 are now switched to state 3. Also the zero removal circuit 91 reverts to its "no unstuff" state.

It can be seen that now, in this condition, each output group DRN 0-3 is formed from the three bits previously stored in the buffer register 95 along with the first bit DRZ0 of the next input group. The remaining three bits DRZ 1-3 of this next input group are then stored in the buffer register 95.

When a second unstuff situation is detected, the three bits from the register 95 are output as before, along with the first bit DRZ 0 of the next input group. However, this time, only two other bits DRZ 1-2 are available for storing in the buffer register 95, since a zero has been removed.

The circuits 94, 96 are now switched to state 2, so that each output group DRN 0-3 is now formed from the two bits stored in the buffer register 95, along with the first two bits of the next group.

Similarly, it can be seen that when third and fourth unstuff situations are detected, the number of bits stored in the buffer register is reduced by one, and the circuits 94, 96 are switched to state 1 and then state 0. The cycle then repeats.

In summary, it can be seen that there is a cycle of four unstuffs. In the first of these, the three remaining bits are saved in the buffer register 95, and no data is output. In each of the next three unstuffs, the deficiency of one bit is supplied by the previously stored bits in the buffer register, and the alignment between the input and output groups is adjusted accordingly.

Logic diagram of the unstuffing circuit

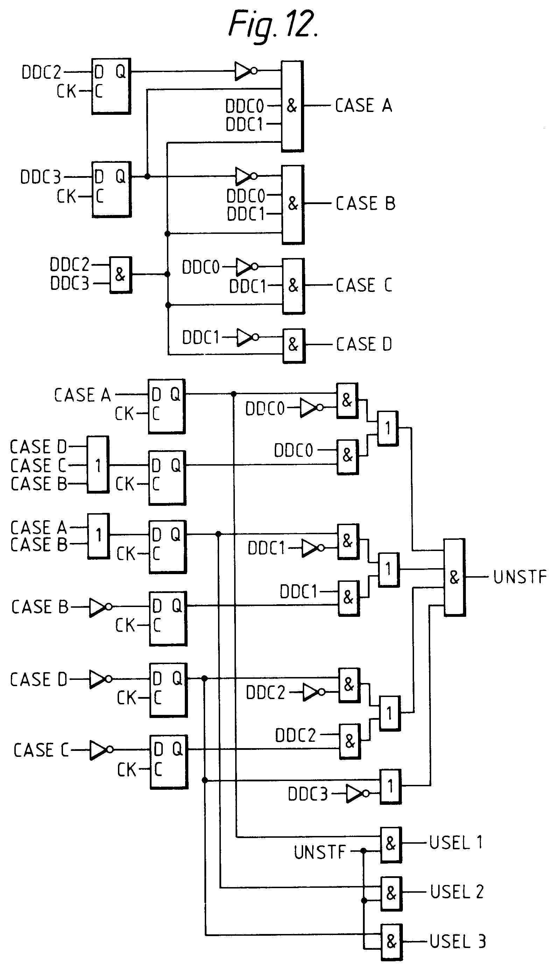

Figure 12 shows the sequence detection circuit 90 in detail.

The circuit comprises D-type flip flops AND gates, OR gates and inverter gates connected as shown. The flip-flops are all clocked by the clock signal CK so that data is loaded into them at each clock beat.

With this circuit arrangement, the signal UNSTUF is produced whenever a sequence of five ones followed by a zero occurs in the input data stream.

The circuit also produces control signals USEL 1-3 for controlling the zero removal circuit 91. As mentioned above, there are five cases, according to the position of the zero to be removed. These five cases are indicated by the control signals as follows:-

|  | USEL 1 | USEL 2 | USEL 3 |
|---|---|---|---|
| case a | 1 | 1 | 1 |
| case b | 0 | 1 | 1 |
| case c | 0 | 0 | 1 |
| case d | 0 | 0 | 0 |
| no unstuff | 0 | 0 | 0 |

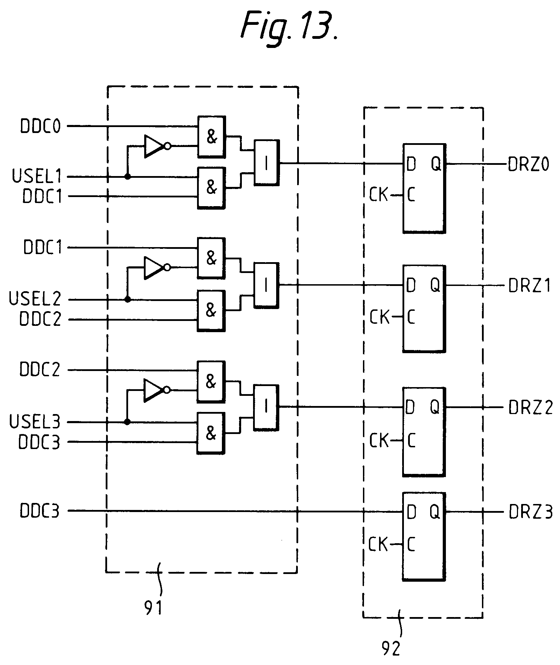

Figure 13 shows the zero removal circuit 91 and the register 92 in detail.

The circuit 91 consists of AND gates, OR gates and inverter gates connected as shown. It can be seen that the control signals USEL 1-3 cause the circuit to operate in the five cases as indicated schematically in Figure 10.

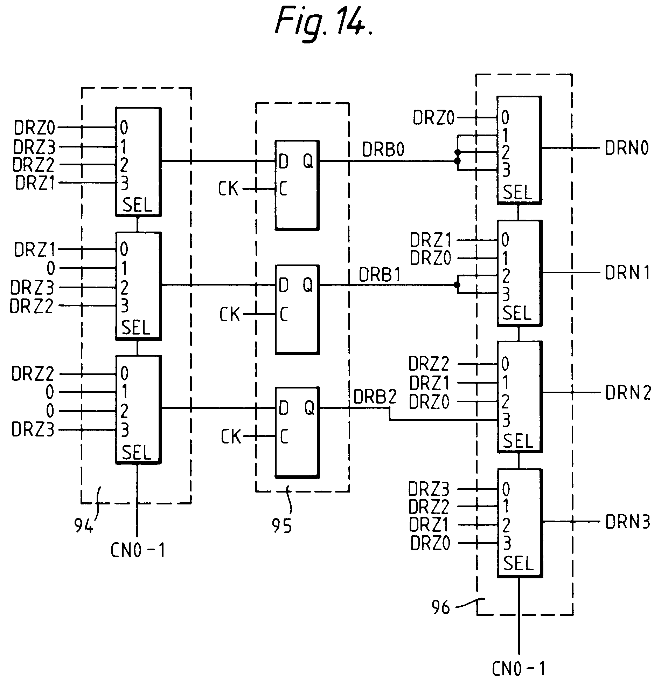

Figure 14 shows the selection circuit 94, buffer register 95, and rotation circuit 96, in detail.

As shown, the selection circuit 94 comprises three 4:1 multiplexer circuits. The buffer register 95 comprises three D-type flip-flops, each of which are clocked by the signal CK. The rotation circuit 96 comprises four 4:1 multiplexer circuits. Each of the multiplexer circuits has a selection input SEL which is controlled by the output CNO-1 of the counter 97.

**Claims**

1. A bit stuffing apparatus for receiving a series of input groups of bits and outputting a series of output groups of bits, each input and output group comprising a plurality of bits in parallel, wherein the apparatus includes a buffer memory (25) for buffering a variable number of bits between the input and output groups, means (20) for detecting a sequence of more than a predetermined number of bits of a first predetermined value in said series of input groups, means (21) operative when such a sequence is detected, for inserting an extra bit of a second predetermined value into the input group, and means (24,26,27) operative when an extra bit is inserted, for increasing the number of bits buffered in the buffer memory by one so as to absorb the extra bit in the buffer memory and to change the alignment between the input and output groups of bits.

2. Apparatus according to claim 1 further including means (28) for preventing acceptance of an input data group when the buffer memory is full, so as to reduce the number of buffered bits.

3. Apparatus according to claim 1 wherein said buffer memory has a capacity one bit less than the number of bits ine ach said input and output group.

4. Apparatus according to any preceding claim including means for reading out the contents of the buffer memory, appending a sufficient number of bits from the current input group of bits to form a complete output group of bits, and then storing any surplus bits from the input group into the buffer memory.

5. Unstuffing apparatus for receiving a series of input groups of bits and outputting a series of output groups of bits in parallel, wherein the apparatus includes a buffer memory for buffering a variable number of bits between the input and output groups, to permit the alignment between the input and output groups to be varied, and wherein, when a sequence of a predetermined number of bits of a first predetermined value followed by a bit of a second predetermined value is detected, said bit of the second predetermined value is removed and the number of bits buffered in the buffer memory is decreased by one so as to replace the removed bit by one of the bits from the buffer memory.

6. Unstuffing apparatus according to claim 5 further including means for producing a WAIT signal when the memory is empty, indicating that an output data group is unavailable until the buffer memory has been refilled.

7. Unstuffing apparatus according to claim 5 or 6, wherein said buffer memory has a capacity one bit less than the number of bits in each said input and output group.

8. Apparatus according to any one of claims 5 to 7, including means for reading out the contents of the buffer memory, appending a sufficient number of bits from the current input group of bits to form a complete output group of bits, and then storing any surplus bits from the input group into the buffer memory.

9. A digital data transmission system including a bit stuffing circuit according to any one of claims 1 to 4 and an unstuffing circuit according to any one of claims 5 to 8.

# Fig.1.

# Fig.2.

# Fig. 3.

|  |  |  |  |  |
|---|---|---|---|---|
| NO STUFF | CASE a | CASE b | CASE c | CASE d |

# Fig. 4.

# Fig.5.

## Fig.6.

# Fig.7.

## Fig.8.

*Fig.9.*

*Fig.10.*

14

## *Fig.11.*

STATE 0       STATE 3

STATE 1       STATE 2

# Fig. 12.

## Fig. 13.

*Fig. 14.*